# EUROPEAN PATENT SPECIFICATION

(11) **EP 3 775 023 B1**
(45) Date of publication and mention of the grant of the patent: **10.05.2023**
(21) Application number: 19714158.3
(22) Date of filing: 25.03.2019
(51) Int. Cl.: C08K 7/14, C08K 7/28, C08K 13/06

(54) **A POLYAMIDE COMPOSITION, MANUFACTURING METHOD, AN APPLICATION AND ARTICLE THEREOF**
POLYAMIDZUSAMMENSETZUNG, HERSTELLUNGSVERFAHREN, ANWENDUNG UND ARTIKEL DARAUS
COMPOSITION POLYAMIDE, PROCÉDÉ DE FABRICATION, APPLICATION ET ARTICLE ASSOCIÉ

(30) Priority: 27.03.2018 WO PCT/CN2018/080656
(43) Date of publication of application: 17.02.2021
(73) Proprietor: BASF SE, 67056 Ludwigshafen am Rhein (DE)
(72) Inventor: PARK, JongHyun, Seoul 4526 (KR); NAN, Yu Long, Shanghai 200137 (CN); KIM, Chung Gil, Seoul 4526 (KR)
(74) Representative: BASF IP Association
(86) International application number: PCT/EP2019/057378
(87) International publication number: WO 2019/185509

(56) References cited:
- WO-A2-2012/151178
- Steve Amos: "'Plug-and-Play' Weight Reduction Solution by Hollow Glass Microspheres", , 1 January 2016 (2016-01-01), XP055599164, Retrieved from the Internet: URL:http://multimedia.3m.com/mws/media/777 887O/3m-glass-bubbles-plug-and-play-weight -reduction-solution.pdf [retrieved on 2019-06-25]

## Description

### FIELD OF THE INVENTION

The present invention relates to a polyamide composition, especially relates to a polyamide composition with low density and high burst pressure. The invention also relates to a manufacturing method and an application thereof, and an article prepared from the polyamide composition.

### DESCRIPTION OF THE RELATED ART

Due to environmental protection and operating cost, fuel saving shows one of the most critical factors for manufactures and consumers. This leads to a trend of reducing the weight of vehicle. Replacing heavier units with lighter material units is the feasible manner to realize the weight reduction of vehicle.

One of the well-known way to realize this aim is to replace metal parts by plastic parts. With the development of plastic parts in the automotive industry, solid plastic parts gradually approach the limitation of weight decrease.

Density decreasing of plastic parts is more and more interested by the automotive manufacturers. Foaming method and lighter reinforcing fiber could be used for this purpose. The foaming method comprises mechanical and chemical foaming methods, such as Mucell method or chemical foaming additives. Mucell method which takes supercritical carbon dioxide as blowing agent is used as processing method to generate porous samples made of thermoplastic. However, the foaming method is difficult to control sizes of foams. The foam size has the great influence on the mechanical properties and other properties. Keeping the mechanical properties of the vehicles units is the other critical factor in the automotive field. If the size of foam is not controllable, it's difficult to predict mechanical property of final plastic parts. Thus, the disadvantage of foaming method is it can't guarantee no sacrifice mechanical properties of the plastic parts, and the uneven surface of the plastic parts.

The reinforcing fibers or higher performance polymers could be used in plastic parts to improve the mechanical property. To decrease the weight of the plastic parts, lighter, stronger and surely more expensive reinforcing fibers (such as carbon fiber or Kevlar) or expensive high-performance polymers are also considered to replace heavier glass or metal fibers, or usual engineering polymers, then to reduce the thickness of plastic parts. However, the disadvantage is the high cost makes it difficult to implement in mass production.

JP2010248494A discloses a polyamide resin composition containing a polyamide resin (A), a hollow filler (B), and a glass fiber (C), wherein the total of (B) and (C) in 100% by mass of the polyamide resin composition is 30 - 70% by mass, (C) / (B) = 3 to 140 (mass ratio), and the breaking rate of the hollow filler (B) is 70 to 95% by mass.

The hollow filler is chosen from glass balloon, ceramic balloon and shirasu balloon. The hollow filler has the true density of 0.4 g/cm³ or less and pressure resistance strength of 2-50 MPa. The high breaking rate of the hollow filler shows most of the hollow fillers were broken during the processing procedure. Then in the final polyamide product, the hollow fillers are in the form of filler pieces, such as glass pieces, ceramic pieces, etc., not in the hollow status any more. The disadvantage of the high breaking rate is the density of the final composition will not decrease heavily, which is hard to match the target density of the final product in automobile field. In the other aspect, the content of hollow filler is quite low, ca. 0.21-2.26 %. The low amount of hollow filler makes it impossible to decrease the weight of plastic parts even the breaking rate is 0 %. WO 2005/066251 discloses a filled thermoplastic resin comprising at least one polyamide and glass bubbles having a crush strength of at least 10,000 PSI treated with at least one of a silane coupling agent or titanate coupling agent. The glass bubbles were slowly added under medium mix speed into a solution of N-2-(aminoethyl)-3-amino propyltrimethoxysilane (1500g, 0.5% by wt), and the mixture was allowed to mix for 15 minutes. The ensuing paste was poured into aluminum pans and dried overnight in a forced air oven at 80 °C. The dried glass bubbles were screened through a 180 microns screen to remove any clumps. As glass bubbles are non-reinforcing fillers, adding glass bubbles to polymers will result in a rapid decrease in the mechanical strength (tensile, impact, etc.). From examples 1-3, it shows that tensile strength at break and flexural strength at break decreased from 76.3 MPa to 51.9 MPa, 115 MPa to 78 MPa with the addition of glass bubbles from 0 to 20wt%. Although the treatment of glass bubbles could provide a surprising combination of tensile strength increase and reduced weight, there is still a large improvement space in the physical properties of polyamide resin, such as impact, flexural, tensile strength. The filled thermoplastic resin could not meet requirements of mechanical properties in electronic components and vehicle elements.

One general solution to increase mechanical properties is to add compatibilizer in the resin, which could enhance the bonding ability with polyamide and glass bubbles. The disadvantage of compatibilizer is that the use of compatibilizer could cause haze on the surface of final article. Some part of vehicle, for example plastic air intake manifold (PAlM), needs higher level of adhesion force after vibration welding, otherwise PAlM is broken during vehicle running/operating. Higher requirement of adhesion force for light weight parts is needed.

### SUMMARY OF THE INVENTION

In one aspect, the present invention provides a polyamide composition, including at least one polyamide, hollow glass bubbles having adhesive on at least a portion of surfaces thereof and reinforcing fibers, wherein crush strength of the hollow glass bubbles is 14, 500 psi or more, the content of the adhesive is 0.05 wt%-5 wt% of the hollow glass bubbles having adhesive.

In another aspect, the present invention provides a manufacturing method of the polyamide composition, comprising combining all components of the polyamide composition.

In another aspect, the present invention provides an application of the polyamide composition in the light weight parts, especially in the light weight parts for vehicles.

In another aspect, the present invention provides an article prepared from the above-mentioned polyamide composition.

The polyamide composition has high mechanical properties which could meet the requirements of electronic components and vehicle elements, and higher burst pressure which was found by the inventors that could improve adhesion force especially after vibration welding, no or less haze on the surface of article and proper density.

### DETAILED DESCRIPTION OF THE INVENTION

The present invention disclosed a polyamide composition, which comprises 55wt%-70wt% of at least one of polyamide, 10 wt%-40 wt% of reinforcing fiber, 3 wt%-12 wt% of hollow glass bubbles having adhesive on at least a portion of surfaces of the hollow glass bubbles, wherein crush strength of the hollow glass bubbles is 14,500 psi or more, the content of the adhesive is 0.05 wt%-5 wt% of the hollow glass bubbles having adhesive on at least a portion of surfaces of the glass bubbles. The crush strength of the hollow glass bubbles is typically measured using ASTM D3102-72 "Hydrostatic Collapse Strength of Hollow Glass Microspheres ".

### Polyamide

The polyamide in the present invention is the conventional thermoplastic polyamide, such as aliphatic polyamide and/or semi-aromatic polyamide, as well as amorphous polyamide and/or semi-crystalline polyamide, and/or polyamide copolymers thereof.

The repeating unit of the polyamides is obtained from at least one component chosen from the group consisting of (A) lactam, (B) dicarboxylic acids and diamine, and (C) aminocarboxylic acid. The suitable lactam is preferably a lactam comprising from 6 to 14 carbon atoms, for example butyrolactam, 2-pyrrolidone (γ-butyrolactam), valerolactam, 2-piperidone (δ-valerolactam), ε-caprolactam, capryllactam, decanolactam, undecanolactam, enantholactam, and/or lauryllactam, more preferably is ε-caprolactam.

The dicarboxylic acid could be aliphatic dicarboxylic acid, cycloaliphatic dicarboxylic acid and/or aromatic dicarboxylic acid.

The suitable aliphatic dicarboxylic acid is preferably at least one aliphatic dicarboxylic acid comprising from 4 to 24 carbon atoms, for example at least one selected from the group comprising succinic acid, glutaric acid, adipic acid, pimelic acid, suberic acid, azelaic acid, sebacic acid, undecane-1,1 1-dicarboxylic acid, dodecane-1,12-dicarboxylic acid, fumaric acid and itaconic acid.

The suitable cycloaliphatic dicarboxylic acid is preferably at least one cycloaliphatic acid comprising at least one carbon backbone selected from the group consisting of cyclohexane, cyclopentane, cyclohexylmethane, dicyclohexylmethane, bis(methylcyclohexyl), more preferably is selected from the group consisting of cis- and trans- cyclopentane-1,3-dicarboxylic acid, cis- and trans- cyclopentane-1,4-dicarboxylic acid, cis- and trans- cyclohexane-1,2-dicarboxylic acid, cis- and trans-cyclohexane-1,3-dicarboxylic acid, cis- and trans-cyclohexane-1,4-dicarboxylic acid.

The suitable aromatic dicarboxylic acid is preferably at least one selected from the group consisting of terephthalic acid, isophthalic acid, naphthalenedicarboxylic acids and diphenyldicarboxylic acids.

The diamine could be aliphatic diamine, cycloaliphatic diamine and/or aromatic diamine.

The suitable aliphatic diamine is preferably at least an aliphatic diamine comprising from 4 to 24 carbon atoms, for example at least one selected from the group consisting of butanediamine, pentanediamine, hexanediamine, heptanediamine, octanediamine, nonanediamine, decanediamine, undecanediamine, dodecanediamine, tridecanediamine, tetradecanediamine, hexade-canediamine, octadecanediamine, octadecenediamine, eicosanediamine, docosanediamine, 2-methylpentanediamine, 2-methyl-1,8-octanediamine, 2,2,4-trimethylhexamethylenediamine, 2,4,4- trimethylhexamethylenediamine, 5-methylnonane-1,9-diamine, and 2,4-dimethyloctanediamine.

The suitable cycloaliphatic diamine is preferably at least one cycloaliphatic diamine selected from the group comprising bis(3,5-dialkyl-4-aminocyclohexyl)methane, bis(3,5-dialkyl-4-aminocyclohexyl)ethane, bis(3,5-dialkyl-4-aminocyclohexyl)propane, bis(3,5-dialkyl-4-aminocyclohexyl)butane, bis(3-methyl-4-aminocyclohexyl)methane (BMACM or MACM), p-bis(aminocyclohexyl)methane (PACM), isopropylidenedi(cyclohexylamine) (PACP) and isopho-ronediamine (IPDA).

The suitable aromatic diamine is preferably at least one selected from the group comprising m-xylylenediamine (MXDA), p-xylylenediamine, bis(4-aminophenyl)methane, 3-methylbenzidine, 2,2-bis(4-aminophenyl)propane, 1,1-bis(4-aminophenyl)cyclohexane, 1,2-diaminobenzene, 1,3-diaminobenzene, 1,4-diaminobenzene, 1,2-diaminonaphthalene, 1,3-diaminonaphthalene, 1,4-diaminonaphthalene, 2,3-diaminotoluene, N,N'-dimethyl-4,4'-bephenyldiamine, bis(4-methylaminophenyl)methane, and 2,2'-bis(4-methylaminophenyul)propane.

The suitable aminocarboxylic acid is preferably 6-aminocaproic acid, 7-aminoheptanoic acid, 9-aminononanoic acid, 10-aminodecanoic acid, 11-aminoundecanoic acid, and/or 12-aminododecanoic acid.

In a preferred embodiment, the polyamide is at least one of the group consisting of PA 5, PA 6, PA 8, PA 9, PA 10, PA 11, PA 12, PA 13, PA 14, PA 4.6, PA 4.8, PA 4.10, PA 4.12, PA 5.5, PA 5.10, PA 5.12, PA 6.4, PA 6.6, PA 6.8, PA 6.9, PA 6.10, PA 6.12, PA 6.18, PA 8.4, PA 8.6, PA 8.8, PA 8.10, PA 8.12, PA 9.9, PA 9.10, PA 9.12, PA 10.4, PA 10.6, PA 10.8, PA 10.9, PA 10.10, PA 10.12, PA 10.14, PA 10.18, PA 12.4, PA 12.6, PA 12.8, PA 12.9, PA 12.10, PA 12.12, PA 12.14, PA 12.18, PA 4.T, PA 6.T, PA 9.T, PA 8.T, PA 10.T, PA 12.T, PA4.I, PA 6.I, PA 8.I, PA 9.1, PA 10.1, PA 12.1, PA MXDA.6, PA IPDA.I, PA IPDA.T, PA MACM.I, PA MACM.T, PA PACM.I, PA PACM.T, PA MXDA.I, and PA MXDA.T.

The polyamide copolymer in the invention is the copolymer comprising polyamide structural segments. In a preferred embodiment, the polyamide copolymer is at least one of the group consisting of PA 6/6.6, PA 6/12, PA 6/11, PA 6.6/11, PA 6.6/12, PA 6/6.10, PA 6.6/6.10, PA 4.6/6, PA6/6.6/6.10, PA 6.T/6, PA 6.T/10, PA 6.T/12, PA 6.T/6.I, PA 6.T/8.T, PA 6.T/9.T, PA 6.T/10.T, PA 6.T/12.T, PA 6.I/6.T, PA 6.T/6.I, PA 6.T/6.I/6, PA 6.T/6.I/12, PA 6.T/6.I/6.10, PA 6.T/6.1/6.12, PA 6.T/6.6, PA 6.I/6.6, PA6.T/6.10, PA 6.T/6.12, PA 10T/6, PA 10.T/11, PA 10.T/12, PA 8.T/66, PA 8.T/8.I, PA 8.T/8.6, PA 8.T/6.I, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I, PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, and/or PA 12.T/IPDA.T.

The molecular weight of the polyamide is the general molecular weight of the polyamide, the number average molecular weight is preferably from 10,000 to 50,000, more preferably is from 12000 to 45000.

In general, the polyamide in the polyamide composition is preferably 55 wt% or more, or 60 wt% or more, and 70 wt% or less, or 65 wt% or less, based on the total weight of the polyamide composition. In some embodiment, the polyamide provides preferably from 55 wt% to 70 wt%, more preferably from 60 wt% to 70 wt%, most preferably from 65 wt% to 70 wt%, based on the total weight of the polyamide composition.

In one embodiment, the polyamide in the polyamide composition is preferable polyamide 6 and/or polyamide 66. The content of the polyamide 6 and/or polyamide 66 in the polyamide composition is preferably from 55 wt% to 70 wt%, more preferably is from 60 wt% to 70 wt%, most preferably is from 65 wt% to 70 wt%, based on the total weight of the polyamide composition.

### Hollow glass bubbles having adhesive on at least a portion of surfaces of the hollow glass bubbles

The hollow glass bubbles in the invention is also called as "hollow glass microspheres", "hollow glass beads", "glass microbubbles" or "glass balloons", having particle size less than about 500 microns, and comprising a hollow part and a glass shell surrounding the hollow part. The hollow part could be filled with gas, such as air. The particle size is preferably median diameter D₅₀ by volume. The particle size of the hollow glass bubbles is preferably ranging from 5 to 50 microns. The true density of the hollow glass bubbles is the quotient obtained by dividing the mass of a sample of hollow glass bubbles by the true volume of that mass of hollow glass bubbles as measured by a gas pycnometer. The true density of the hollow glass bubbles in the invention is preferably 0.3-0.7 g/cc, more preferably is 0.4-0.6 g/cc. The true density of the hollow glass bubbles is typically measured using ASTM D2840-69, "Average True Particle Density of Hollow Microspheres".

The crush strength of the hollow glass bubbles is preferably 15,000 psi to 17,500 psi, more preferably is 16,000 psi to 17,500 psi. The choice of preferred crush strength and preferred true density could bring quite lower breaking rate in the final molded article. The crush strength of the hollow glass bubbles is typically measured using ASTM D3102-72 "Hydrostatic Collapse Strength of Hollow Glass Microspheres "

The adhesive on the surfaces of the glass bubbles adhesive is preferably uniformly distributed on the surfaces of the hollow glass bubbles.

The adhesive on the surface of the hollow glass bubbles is the conventional adhesive for bonding inorganic glass and organic polymers, preferably is silane coupling agents, urethane, epoxide, and/or amino-silane acid copolymers.

The silane coupling agent in the invention could be the silane coupling agent commonly used for polyamide resin, preferable is at least one selected from the group consisting of epoxy functional silane, urethane functional silane and amino ureide functional silane, more preferable is at least one selected from the group consisting of epoxycyclohexyl functional silane, glycidoxy functional silane, isocyanate functional silane and amino ureide functional silane, most preferably is at least one selected from 2-(3,4-epoxycyclohexyl) ethyltrimethoxysilane, 3-glycidoxypropyl methyldimethoxysilane, 3-glycidoxypropyl trimethoxysilane, 3-glycidoxypropyl methyldiethoxysilane, 3-glycidoxypropyl triethoxysilane, N-2-(aminoethyl)-3-aminopropylmethyldimethoxysilane, N-2-(aminoethyl)-3-aminopropyltrimethoxysilane, N-2-(aminoethyl)-3-aminopropylmethyldimethoxysilane, N-2-(aminoethyl)-3-aminopropyltributoxysilane, N-2-(aminoethyl)-3-aminopropylmethyldiethoxysilane, N-2-(aminoethyl)-3-aminopropyltriethoxysilane, 3-aminopropyltrimethoxysilane, 3-aminopropylmethyldiethoxysilane, 3-aminopropylmethyldimethoxysilane, 3-aminopropyldimethylmethoxysilane, 3-aminopropyldimethylethoxysilane, 3-aminopropyltriethoxysilane, 3-triethoxyysily-N-(1,3 dimethyl-butylidene) propylamine, N-phenyl-3-aminopropyltrimethoxysilane, N-(vinylbenzyl)-2-aminoethyl-3-aminopropyltrimethoxysilane hydrochloride, 3-ureidopropyltrialkoxysilane and 3-isocyanatepropyltriethoxysilane.

The preferable urethane is polyurethane adhesive, such as one component polyurethane adhesive, or two components polyurethane adhesive.

The hollow glass bubbles having adhesive on at least a portion of surfaces thereof could use conventional method to bond adhesive to the surfaces of hollow glass bubbles so long as the adhesive could be on the surface of pure hollow glass bubbles, such as spraying, dipping, or mixing, preferable is spraying.

The content of the adhesive affects the mechanical properties of the article prepared from the polyamide composition. It has been proved that the mechanical properties increase with higher content of the adhesive. However, haze occurs on the articles. The content of the adhesive disclosed in the invention is from 0.05 wt% to 5 wt%, preferable is from 0.05 wt% to 3 wt%, more preferable is from 0.05 wt% to 1 wt% or 0.05 wt% to 0.5 wt%, based on the total weight of the hollow glass bubbles having adhesive on at least a portion of surfaces thereof, these contents could keep good machinal properties and burst pressure, and do not cause haze on the articles. The content of the hollow glass bubbles having adhesive on at least portion of surfaces thereof is preferable from 3 wt% to 10 wt%, more preferable from 3 wt% to 9 wt%, most preferable from 6 wt% to 9 wt%, based on the total weight of the polyamide composition.

### Reinforcing fibers

The combination of hollow glass bubbles having adhesive on the surfaces and reinforcing fibers is useful for enhancing burst pressure and impact strength, as well as other mechanical properties of the article prepared from the polyamide composition.

The reinforcing fiber could use the conventional reinforcing fibers, such as glass fibers, carbon fibers, natural fibers, ultra-high molecular weight ("UHMW") polyethylene fibers, boron fibers, aramid fibers and/or poly(p-phenylene-2,6-benzobisoxazole ("PBO") fibers, preferable is glass fibers.

The cross section of the glass fibers could be circular or non-circular, such as oval, ellipse, flat, triangle, rectangle, star, T shape, or Y shape.

The reinforcing fiber in the polyamide composition is in the content of 10 wt% or more, 15 wt% or more, 20 wt% or more, or 25 wt% or more, and 30 wt% or less, 35 wt% or less, or 40 wt% or less, based on the total weight of the polyamide composition. In some embodiments, the reinforcing fiber is in the content of a range from 15 wt% to 35 wt%, 20 wt% to 35 wt%, or 25 wt% to 30 wt%, based on the total weight of the polyamide composition.

### Additives

The polyamide composition could also comprise various plastic additives so long as the additives not significantly adversely affect the desired properties of the polyamide composition in the invention. The additives could include surface effect additive, antioxidant, colorant, heat stabilizer, light stabilizer, flow modifier, plasticizer, demolding agent, flame retardant, anti-drip agent, radiation stabilizer, ultraviolet absorbing, ultraviolet light stabilizer, release agent, and/or antimicrobial agent.

The heat stabilizer could be the conventional heat stabilizer, such as copper heat stabilizer and/or organic amine heat stabilizer, for example Irganox 1098.

The content of the heat stabilizer in the composition is preferably 0 to 0.5 wt%, more preferably is 0.01 to 0.5 wt%, based on the total weight of the polyamide composition.

The light stabilizer could be the conventional light stabilizer, such as hindered amine compounds, benzophenone, benzotriazole and/or salicylates light stabilizer. The preferred light stabilizer could be 2-hydroxy-4-n-octoxy benzophenone, 2-(2-hydroxy-5-methylphenyl) benzotriazole, aryl salicylates, and/or 2-(2-hydroxy-5-tert-octylphenyl) benzotriazole, etc.

The lubricant could be the conventional lubricant for polyamide composition, such as stearate, polyethylene wax, ethylene bis stearamide(EBS), fatty acid ester, wax, phthalic acid ester and/or silicones, etc.

The flame retardant could be the conventional flame retardant, for example the inorganic flame retardant and/or organic flame retardant. The organic flame retardant could include phosphorus, brominated, chlorinated and/or nitrogen flame retardant.

Expect for the adhesive on at least a portion of surfaces of the hollow glass bubbles, the polyamide composition could also contain some other adhesive and/or compatibilizer, the total content of the other adhesive, the compatibilizer and the adhesive on the surface of the hollow glass bubbles is 0.6 wt% or less, more preferably is 0.01 wt% to 0.45 wt%, based on the total weight of the polyamide composition.

The content of the other additives except the heat stabilizer, adhesive and compatibilizer in the polyamide composition is preferably 0-1.5 wt%, more preferably is 0.01-1.5 wt%, based on the total weight of the polyamide composition.

The present invention also discloses a manufacturing method of the polyamide composition, comprising combining all components of the polyamide composition.

In a preferred embodiment, the combining could be extruding or melt kneading. Preferred process of extruding is: all the components of the polyamide composition except for the glass fibers and hollow glass bubbles having adhesive on at least a portion of surfaces thereof being fed into the main throat of a screw extruder, the hollow glass bubbles having adhesive on at least a portion of surfaces thereof being fed at a down-stream mineral throat into the screw extruder, the glass fibers being fed at a down-stream throat after the mineral throat into the screw extruder, and extruding.

The present invention also discloses an application of the polyamide composition in the light weight parts, especially in the light weight parts for vehicles.

The present invention also discloses an article prepared from or preparable from the polyamide composition in the invention.

In the present invention, all the technical features mentioned above could be freely combined to form the preferred embodiments.

The present invention has the following benefits: the polyamide composition has low density which fulfills the requirement of light weight plastic parts for automobile fields. Meanwhile, the polyamide composition could balance the low density and the good mechanical properties without haze caused by overuse of compatibilizer.

### EMBODIMENTS

The following examples serve to illustrate the invention, but they are not intended to limit it thereto:
The component used in the embodiments are:
PA6:relative viscosity 1%[m/v] in 96%[m/m] sulfuric acid is 2.62-2.83(ISO 307, calculated by Huggins method), Tₘ is 220°C (ISO 3146).

Glass fiber: diameter=10 µm, glass fiber for polyamide.

The surface treated hollow glass bubbles has 3-aminopropyltriethoxysilane coupling agent (adhesive) on the surface of the hollow glass bubbles 3M^{™} iM16K, and has true density of 0.46 g/cc, crush strength of 16000 psi. The particle size of the glass bubbles is 22 microns. The content of adhesive on the surface is 0.3 wt% of the surface treated hollow glass bubbles. The untreated hollow glass bubbles are 3M^{™} iM16K.

Low crush strength hollow glass bubbles: 3M^{™} K46 having true density of 0.46 g/cc, crush strength of 6000 psi. The particle size of the glass bubbles is 40 microns.

Heat stabilizer: Cul heat stabilizer.

Additives: Cast and black color master batch.

Compatibilizer: 3-aminopropyltriethoxysilane coupling agent.

The extruding condition for the following examples are:
The zone temperature of the screw extruder is: zone 1 at 55°C, zone 2 at 210°C, zone 3 at 255 °C, zone 4 at 270°C, zone 5 at 270°C, zone 6 at 270°C, zone 7 at 270°C, zone 8 at 270°C, zone 9 at 270°C; the screw speed is 500 rpm; the die temperature is 280°C.

### Examples 1 - 2

All the components of the polyamide compositions of examples 1-2 and comparative examples 1-5 are listed in Table 1. All the components except for hollow glass bubbles and glass fibers were fed into main throat, glass bubbles and glass fibers were fed at a down-stream throat (zone 4 for hollow glass bubbles and zone 7 for glass fibers) to keep good shape retention, and then extruded using a twin-screw extruder. The strand was cooled through a water bath prior to pelletizing, obtained pellets.

**Table 1**

| Component | Unit | C1 | C2 | C3 | C4 | C5 | E1 | E2 |
|---|---|---|---|---|---|---|---|---|
| PA6 | % | 65.7 | 63.7 | 63.7 | 63.7 | 65.2 | 63.7 | 65.7 |
| Glass fiber | % | 33 | 20 | 25 | 27 | 27 | 27 | 27 |
| Surface treated hollow glass bubble | % | - | - | - | - | - | 8 | 6 |
| Untreated hollow glass bubbles | % | - | 15 | - | 8 | 6 | - | - |
| Low crush strength hollow glass bubble | % | - | - | 10 | - | - | - | - |
| Heat stabilizer | % | 0.3 | 0.3 | 0.3 | 0.3 | 0.3 | 0.3 | 0.3 |
| Additives | % | 1 | 1 | 1 | 1 | 1 | 1 | 1 |
| Compatibilizer | % | - | - | - | - | 0.5 | - | - |
| Characterization | Unit | | | | | | | |
| Tensile stress at break (ISO 527-2) | MPa | 184 | 110 | 153 | 160 | 171 | 179 | 172 |
| Tensile strain at break (ISO 527-2) | % | 3.2 | 1.9 | 2.4 | 2.6 | 3.1 | 3.2 | 3.4 |
| Tensile modulus (ISO 527-2) | MPa | 10200 | 8360 | 9480 | 9690 | 9440 | 9610 | 9360 |
| Flexural strength (ISO 178) | MPa | 273 | 161 | 229 | 234 | 249 | 258 | 248 |
| Flexural modulus (ISO 178) | MPa | 9300 | 7660 | 8340 | 8660 | 8560 | 8720 | 8450 |
| Charpy unnotched impact strength (ISO 179-1eA) | KJ/m² | 83 | 28 | 48 | 54 | 88 | 85 | 87 |
| Ash content-method A (ISO 3451) | % | 33 | 35 | 35 | 35 | 33 | 35 | 33 |
| Density-method A (ISO 1183) | g/cm3 | 1.39 | 1.13 | 1.34 | 1.26 | 1.28 | 1.26 | 1.28 |
| Burst pressure in lab | MPa | 3.19 | 1.43 | 2.18 | 2.35 | 3.22 | 3.12 | 3.21 |
| Haze on surface of molded part | | No | No | No | No | Yes | No | No |

Test: after drying the obtained pellets at 100 °C for 6 hours, all the testing samples were prepared and tested for various mechanical properties using the standard ISO method as below. The test results are listed in Table 1.

Burst pressure in lab was tested according to the following steps:
Step 1, the polyamide composition of C1-C5 and E1-E2 was injection molded into burst box (Box type specimen); the conditions of injection molding: machine name: J140AD; Barrel temperature: NH 275, H3 275, H2 265, H1 260 °C; mold temperature: 85 °C; injection pressure: 98.2 MPa; injection speed: 13 mm/s; holding pressure: 58.8 MPa; injection/Holding time: 20 s; cooling time: 30 s; cycle time: 58s;
Step 2, vibration welding the burst box; the conditions of vibration welding: machine name: 2800J-DC; welding control mode: melt depth control; melt depth:1.5 mm; amplitude:1.5 mm; welding clamp pressure: 1.5 MPa;
Step 3, test burst pressure of the welded burst box: the welded burst box was located in IN-STRON 8802 (Water hydraulic system) and connector (hose or pipe) is connected with the welded burst box, water was injected under the test conditions until the welded burst box was broken. The test conditions: test speed: 0.1 mm/s; water temperature:25 °C).

Seen from comparative example 1 (C1), in which no glass bubbles comprise and high amount of glass fiber contains, it shows that the polyamide composition without any glass bubbles has high density about 1.39 g/cm³ and the best mechanical properties. When glass bubbles with no adhesive on surface were added in C2 and C4, the density of the pellets decreased to 1.13 g/cm³ and 1.26 g/cm³, however the mechanical properties, such as tensile stress at break, charpy unnotched impact strength and burst pressure undesirably decrease rapidly, especially when the content of glass bubbles is 15 wt%, the mechanical properties of C2 can't reach the desired level, the burst pressure of C4 can't approach the requirement of application.

Comparing with C4 and E1, it shows that when the hollow glass bubbles has no adhesive on surface, the mechanical properties of C4 are lower than the one having adhesive, the burst pressure of E1 is much higher than C4. The hollow glass bubbles with adhesive has great influence on increasing the burst pressure.

Comparing C5 and E2, it shows that when the hollow glass bubbles having adhesive are used, no haze any more for E2 composition, while C5 composition still exist haze even the content of compatibilizer is only 0.5%. Moreover, the burst pressure of E2 is the same as C5 even when the content of adhesive in E2 decreases to 0.018%, and the other mechanical properties keep in the same level as C5 considering the experimental error (~1%). After using the combination of hollow glass bubbles having adhesive and glass fibers, the polyamide composition could approach the same level mechanical properties with usual polyamide composition in which the adhesive is mixed with other components and the higher burst pressure, while the content of adhesive in the surface treated hollow glass bubbles is quite lower than that in the usually polyamide composition.

## Claims

1. A polyamide composition, which comprises 55wt%-70wt% of at least one of polyamide, 10 wt%-40 wt% of reinforcing fiber, 3 wt%-12 wt% of hollow glass bubbles having adhesive on at least a portion of surfaces of the hollow glass bubbles, wherein crush strength of the hollow glass bubbles is 14,500 psi or more, the content of the adhesive is 0.05-5 wt% of the hollow glass bubbles having adhesive on at least a portion of surfaces of the glass bubbles; the adhesive on at least a portion of surfaces of the glass bubbles adhesive is silane coupling agents, urethane, epoxide, and/or amino-silane acid copolymers.

2. The polyamide composition according to claim 1, wherein the silane coupling agent is at least one selected from the group consisting of epoxy functional silane, urethane functional silane and amino ureide functional silane, preferable from the group consisting of epoxycyclohexyl functional silane, glycidoxy functional silane, isocyanate functional silane and amino ureide functional silane.

3. The polyamide composition according to at least one of claims 1-2, wherein the silane coupling agent is at least one selected from 2-(3,4-epoxycyclohexyl) ethyltrimethoxysilane, 3-glycidoxypropyl methyldimethoxysilane, 3-glycidoxypropyl trimethoxysilane, 3-glycidoxypropyl methyldiethoxysilane, 3-glycidoxypropyl triethoxysilane, N-2-(aminoethyl)-3-aminopropylmethyldimethoxysilane, N-2-(aminoethyl)-3-aminopropyltrimethoxysilane, N-2-(aminoethyl)-3-aminopropylmethyldimethoxysilane, N-2-(aminoethyl)-3-aminopropyltributoxysilane, N-2-(aminoethyl)-3-aminopropylmethyldiethoxysilane, N-2-(aminoethyl)-3-aminopropyltriethoxysilane, 3-aminopropyltrimethoxysilane, 3-aminopropylmethyldiethoxysilane, 3-aminopropylmethyldimethoxysilane, 3-aminopropyldimethylmethoxysilane, 3-aminopropyldimethylethoxysilane, 3-aminopropyltriethoxysilane, 3-triethoxyysily-N-(1,3 dimethyl-butylidene) propylamine, N-phenyl-3-aminopropyltrimethoxysilane, N-(vinylbenzyl)-2-aminoethyl-3-aminopropyltrimethoxysilane hydrochloride, 3-ureidopropyltrialkoxysilane and 3-isocyanatepropyltriethoxysilane

4. The polyamide composition according to at least one of claims 1-3, wherein the content of the adhesive is from 0.05 wt% to 3 wt%, preferable is from 0.05 wt% to 1 wt% or from 0.05 wt% to 0.5 wt%, based on the total weight of the hollow glass bubbles having adhesive on at least a portion of surfaces thereof.

5. The polyamide composition according to at least one of claims 1-4, wherein the content of the hollow glass bubbles having adhesive on at least portion of surfaces thereof is from 3 wt% to 10 wt%, preferable from 3 wt% to 9 wt%, more preferable from 6 wt% to 9 wt%, based on the total weight of the polyamide composition.

6. The polyamide composition according to at least one of claims 1-5, wherein the polyamide is aliphatic polyamide, semi-aromatic polyamide, amorphous polyamide, semi-crystalline polyamide, and/or polyamide copolymers thereof.

7. The polyamide composition according to at least one of claims 1-6, wherein the repeating unit of the polyamides is obtained from at least one component chosen from the group consisting of (A) lactam, (B) dicarboxylic acids and diamine, and (C) aminocarboxylic acid.

8. The polyamide composition according to at least one of claims 1-7, wherein the polyamide is at least one selected from PA 5, PA 6, PA 8, PA 9, PA 10, PA 11, PA 12, PA 13, PA 14, PA 4.6, PA 4.8, PA 4.10, PA 4.12, PA 5.5, PA 5.10, PA 5.12, PA 6.4, PA 6.6, PA 6.8, PA 6.9, PA 6.10, PA 6.12, PA 6.18, PA 8.4, PA 8.6, PA 8.8, PA 8.10, PA 8.12, PA 9.9, PA 9.10, PA 9.12, PA 10.4, PA 10.6, PA 10.8, PA 10.9, PA 10.10, PA 10.12, PA 10.14, PA 10.18, PA 12.4, PA 12.6, PA 12.8, PA 12.9, PA 12.10, PA 12.12, PA 12.14, PA 12.18, PA 4.T, PA 6.T, PA 9.T, PA 8.T, PA 10.T, PA 12.T, PA4.I, PA 6.I, PA 8.I, PA 9.I, PA 10.1, PA 12.1, PA MXDA.6, PA IPDA.I, PA IPDA.T, PA MACM.I, PA MACM.T, PA PACM.I, PA PACM.T, PA MXDA.I, and PA MXDA.T.

9. The polyamide composition according to at least one of claims 1-8, wherein the true density of the hollow glass bubbles is 0.3-0.7 g/cc, preferably is 0.4-0.6 g/cc; and/or the particle size of the hollow glass bubbles is from 5 to 50 microns.

10. The polyamide composition according to at least one of claims 1-9, wherein the crush strength of the hollow glass bubbles is from 15,000 psi to 17,500 psi, preferably is from 16,000 psi to 17,500 psi.

11. The polyamide composition according to at least one of claims 1-10, wherein the reinforcing fiber is glass fibers, carbon fibers, natural fibers, UHMW polyethylene fibers, boron fibers, aramid fibers and/or PBO fibers.

12. The polyamide composition according to at least one of claims 1-11, wherein the polyamide is from 55 wt% to 70 wt%, preferably from 60 wt% to 70 wt%, more preferably from 65 wt% to 70 wt%, based on the total weight of the polyamide composition; the reinforcing fiber is in the content of a range from 15 wt% to 35 wt%, 20 wt% to 35 wt%, or 25 wt% to 30wt%, based on the total weight of the polyamide composition.

13. The application of the polyamide composition according to at least one of claims 1-12 in the light weight parts, preferably in the light weight parts for vehicles.

14. An article prepared from or preparable from the polyamide composition according to at least one of claims 1-12.

## Patentansprüche

1. Polyamidzusammensetzung, die 55 Gew.-%-70 Gew.-% mindestens eines Polyamids, 10 Gew.-%-40 Gew.-% Verstärkungsfaser, 3 Gew.-%-12 Gew.-% Glashohlkugeln mit Klebstoff auf mindestens einem Teil der Oberflächen der Glashohlkugeln umfasst, wobei die Druckfestigkeit der Glashohlkugeln 14.500 psi oder mehr beträgt, der Gehalt des Klebstoffs 0,05-5 Gew.-% der Glashohlkugeln mit Klebstoff auf mindestens einem Teil der Oberflächen der Glaskugeln beträgt und es sich bei dem Klebstoff auf mindestens einem Teil der Oberflächen der Glaskugeln um Silankupplungsmittel, Urethan-, Epoxid- und/oder Aminosilan-Säure-Copolymere handelt.

2. Polyamidzusammensetzung nach Anspruch 1, wobei es sich bei dem Silankupplungsmittel um mindestens eines handelt, das aus der Gruppe bestehend aus epoxidfunktionellem Silan, urethanfunktionellem Silan und aminoureidfunktionellem Silan, bevorzugt aus der Gruppe bestehend aus epoxycyclohexylfunktionellem Silan, glycidoxyfunktionellem Silan, isocyanatfunktionellem Silan und aminoureidfunktionellem Silan ausgewählt ist.

3. Polyamidzusammensetzung nach mindestens einem der Ansprüche 1-2, wobei es sich bei dem Silankupplungsmittel um mindestens eines handelt, das aus 2-(3,4-Epoxycyclohexyl)ethyltrimethoxysilan, 3-Glycidoxypropylmethyldimethoxysilan, 3-Glycidoxypropyltrimethoxysilan, 3-Glycidoxypropylmethyldiethoxysilan, 3-Glycidoxypropyltriethoxysilan, N-2-(Aminoethyl)-3-aminopropylmethyldimethoxysilan, N-2-(Aminoethyl)-3-aminopropyltrimethoxysilan, N-2-(Aminoethyl)-3-aminopropylmethyldimethoxysilan, N-2-(Aminoethyl)-3-aminopropyltributoxysilan, N-2-(Aminoethyl)-3-aminopropylmethyldiethoxysilan, N-2-(Aminoethyl)-3-aminopropyltriethoxysilan, 3-Aminopropyltrimethoxysilan, 3-Aminopropylmethyldiethoxysilan, 3-Aminopropylmethyldimethoxysilan, 3-Aminopropyldimethylmethoxysilan, 3-Aminopropyldimethylethoxysilan, 3-Aminopropyltriethoxysilan, 3-Triethoxysilyl-N-(1,3-dimethylbutyliden)propylamin, N-Phenyl-3-aminopropyltrimethoxysilan, N-(Vinylbenzyl)-2-aminoethyl-3-aminopropyl-trimethoxysilan-hydrochlorid, 3-Ureidopropyltrialkoxysilan und 3-Isocyanatopropyltriethoxysilan ausgewählt ist.

4. Polyamidzusammensetzung nach mindestens einem der Ansprüche 1-3, wobei der Gehalt des Klebstoffs 0,05 Gew.-% bis 3 Gew.-%, bevorzugt 0,05 Gew.-% bis 1 Gew.-% oder 0,05 Gew.-% bis 0,5 Gew.-%, bezogen auf das Gesamtgewicht der Glashohlkugeln mit Klebstoff auf mindestens einem Teil ihrer Oberflächen, beträgt.

5. Polyamidzusammensetzung nach mindestens einem der Ansprüche 1-4, wobei der Gehalt der Glashohlkugeln mit Klebstoff auf mindestens einem Teil ihrer Oberflächen 3 Gew.-% bis 10 Gew.-%, bevorzugt 3 Gew.-% bis 9 Gew.-%, weiter bevorzugt 6 Gew.-% bis 9 Gew.-%, bezogen auf das Gesamtgewicht der Polyamidzusammensetzung, beträgt.

6. Polyamidzusammensetzung nach mindestens einem der Ansprüche 1-5, wobei es sich bei dem Polyamid um aliphatisches Polyamid, teilaromatisches Polyamid, amorphes Polyamid, teilkristallines Polyamid und/oder Polyamid-Copolymere davon handelt.

7. Polyamidzusammensetzung nach mindestens einem der Ansprüche 1-6, wobei die Wiederholungseinheit der Polyamide aus mindestens einer Komponente aus der Gruppe bestehend aus (A) Lactam, (B) Dicarbonsäuren und Diamin und (C) Aminocarbonsäure erhalten wird.

8. Polyamidzusammensetzung nach mindestens einem der Ansprüche 1-7, wobei es sich bei dem Polyamid um mindestens eines handelt, das aus PA 5, PA 6, PA 8, PA 9, PA 10, PA 11, PA 12, PA 13, PA 14, PA 4.6, PA 4.8, PA 4.10, PA 4.12, PA 5.5, PA 5.10, PA 5.12, PA 6.4, PA 6.6, PA 6.8, PA 6.9, PA 6.10, PA 6.12, PA 6.18, PA 8.4, PA 8.6, PA 8.8, PA 8.10, PA 8.12, PA 9.9, PA 9.10, PA 9.12, PA 10.4, PA 10.6, PA 10.8, PA 10.9, PA 10.10, PA 10.12, PA 10.14, PA 10.18, PA 12.4, PA 12.6, PA 12.8, PA 12.9, PA 12.10, PA 12.12, PA 12.14, PA 12.18, PA 4.T, PA 6.T, PA 9.T, PA 8.T, PA 10.T, PA 12.T, PA4.I, PA 6.I, PA 8.I, PA 9.1, PA 10.1, PA 12.1, PA MXDA.6, PA IPDA.I, PA IPDA.T, PA MACM.I, PA MACM.T, PA PACM.I, PA PACM.T, PA MXDA.I und PA MXDA.T ausgewählt ist.

9. Polyamidzusammensetzung nach mindestens einem der Ansprüche 1-8, wobei die wahre Dichte der Glashohlkugeln 0,3-0,7 g/cm³, bevorzugt 0,4-0,6 g/cm³, beträgt und/oder die Teilchengröße der Glashohlkugeln 5 bis 50 Mikron beträgt.

10. Polyamidzusammensetzung nach mindestens einem der Ansprüche 1-9, wobei die Druckfestigkeit der Glashohlkugeln 15.000 psi bis 17.500 psi, bevorzugt 16.000 psi bis 17.500 psi, beträgt.

11. Polyamidzusammensetzung nach mindestens einem der Ansprüche 1-10, wobei es sich bei der Verstärkungsfaser um Glasfasern, Kohlefasern, Naturfasern, UHMW-Polyethylen-Fasern, Borfasern, Aramidfasern und/oder PBO-Fasern handelt.

12. Polyamidzusammensetzung nach mindestens einem der Ansprüche 1-11, wobei das Polyamid 55 Gew.-% bis 70 Gew.-%, bevorzugt 60 Gew.-% bis 70 Gew.-%, weiter bevorzugt 65 Gew.-% bis 70 Gew.-%, bezogen auf das Gesamtgewicht der Polyamidzusammensetzung, ausmacht und die Verstärkungsfaser in einem Gehalt im Bereich von 15 Gew.-% bis 35 Gew.-%, 20 Gew.-% bis 35 Gew.-% oder 25 Gew.-% bis 30 Gew.-%, bezogen auf das Gesamtgewicht der Polyamidzusammensetzung, vorliegt.

13. Anwendung der Polyamidzusammensetzung nach mindestens einem der Ansprüche 1-12 in leichtgewichtigen Teilen, bevorzugt in leichtgewichtigen Teilen für Fahrzeuge.

14. Artikel, hergestellt oder herstellbar aus der Polyamidzusammensetzung nach mindestens einem der Ansprüche 1-12.

## Revendications

1. Composition de polyamide, qui comprend 55 % en poids à 70 % en poids d'au moins un polyamide, 10 % en poids à 40 % en poids d'une fibre de renforcement, 3 % en poids à 12 % en poids de bulles de verre creuses possédant un adhésif sur au moins une partie de surfaces des bulles de verre creuses, une résistance à l'écrasement des bulles de verre creuses étant de 14 500 psi ou plus, la teneur de l'adhésif étant de 0,05 à 5 % en poids des bulles de verre creuses possédant un adhésif sur au moins une partie de surfaces des bulles de verre creuses ; l'adhésif sur au moins une partie de surfaces des bulles de verre creuses étant des agents de couplage de type silane, des copolymères d'uréthane, d'époxyde et/ou d'aminosilane-acide.

2. Composition de polyamide selon la revendication 1, l'agent de couplage de type silane étant au moins choisi dans le groupe constitué par un silane fonctionnalisé par époxy, un silane fonctionnalisé par uréthane et un silane fonctionnalisé par uréide, préférablement dans le groupe constitué par un silane fonctionnalisé par époxycyclohexyle, un silane fonctionnalisé par glycidoxy, un silane fonctionnalisé par isocyanate et un silane fonctionnalisé par amino-uréide.

3. Composition de polyamide selon au moins l'une des revendications 1 et 2, l'agent de couplage du type silane étant au moins l'un choisi parmi le 2-(3,4-époxycyclohexyl)éthyltriméthoxysilane, le 3-glycidoxypropylméthyldiméthoxysilane, le 3-glycidoxypropyltriméthoxysilane, le 3-glycidoxypropylméthyldiéthoxysilane, le 3-glycidoxypropyltriéthoxysilane, le N-2-(aminoéthyl)-3-aminopropylméthyldiméthoxysilane, le N-2-(aminoéthyl)-3-aminopropyltriméthoxysilane, le N-2-(aminoéthyl)-3-aminopropylméthyldiméthoxysilane, le N-2-(aminoéthyl)-3-aminopropyltributoxysilane, le N-2-(aminoéthyl)-3-aminopropylméthyldiéthoxysilane, le N-2-(aminoéthyl)-3-aminopropyltriéthoxysilane, le 3-aminopropyltriméthoxysilane, le 3-aminopropylméthyldiéthoxysilane, le 3-aminopropylméthyldiméthoxysilane, le 3-aminopropyldiméthylméthoxysilane, le 3-aminopropyldiméthyléthoxysilane, le 3-aminopropyltriéthoxysilane, la 3-triéthoxyysily-N-(1,3-diméthyl-butylidène)propylamine, le N-phényl-3-aminopropyltriméthoxysilane, le chlorhydrate de N-(vinylbenzyl)-2-aminoéthyl-3-aminopropyltriméthoxysilane, le 3-uréidopropyltrialkoxysilane et 3-isocyanatepropyltriéthoxysilane.

4. Composition de polyamide selon au moins l'une des revendications 1 à 3, la teneur de l'adhésif étant de 0,05 % en poids à 3 % en poids, préférablement étant de 0,05 % en poids à 1 % en poids ou de 0,05 % en poids à 0,5 % en poids, sur la base du poids total des bulles de verre creuses possédant un adhésif sur au moins une partie de surfaces de celles-ci.

5. Composition de polyamide selon au moins l'une des revendications 1 à 4, la teneur des bulles de verre creuses possédant un adhésif sur au moins une partie de surfaces de celles-ci étant de 3 % en poids à 10 % en poids, préférablement de 3 % en poids à 9 % en poids, plus préférablement de 6 % en poids à 9 % en poids, sur la base du poids total de la composition de polyamide.

6. Composition de polyamide selon au moins l'une des revendications 1 à 5, le polyamide étant un polyamide aliphatique, un polyamide semi-aromatique, un polyamide amorphe, un polyamide semi-cristallin et/ou des copolymères de polyamide correspondants.

7. Composition de polyamide selon au moins l'une des revendications 1 à 6, le motif répétitif des polyamides étant obtenu à partir d'au moins un composant choisi dans le groupe constitué par (A) un lactame, (B) des acides dicarboxyliques et une diamine, et (C) un acide aminocarboxylique.

8. Composition de polyamide selon au moins l'une des revendications 1 à 7, le polyamide étant au moins l'un choisi parmi PA 5, PA 6, PA 8, PA 9, PA 10, PA 11, PA 12, PA 13, PA 14, PA 4.6, PA 4.8, PA 4.10, PA 4.12, PA 5.5, PA 5.10, PA 5.12, PA 6.4, PA 6.6, PA 6.8, PA 6.9, PA 6.10, PA 6.12, PA 6.18, PA 8.4, PA 8.6, PA 8.8, PA 8.10, PA 8.12, PA 9.9, PA 9.10, PA 9.12, PA 10.4, PA 10.6, PA 10.8, PA 10.9, PA 10.10, PA 10.12, PA 10.14, PA 10.18, PA 12.4, PA 12.6, PA 12.8, PA 12.9, PA 12.10, PA 12.12, PA 12.14, PA 12.18, PA 4.T, PA 6.T, PA 9.T, PA 8.T, PA 10.T, PA 12.T, PA4.I, PA 6.1, PA 8.I, PA 9.1, PA 10.1, PA 12.1, PA MXDA.6, PA IPDA.I, PA IPDA.T, PA MACM.I, PA MACM.T, PA PACM.I, PA PACM.T, PA MXDA.I et PA MXDA.T.

9. Composition de polyamide selon au moins l'une des revendications 1 à 8, la densité réelle des bulles de verre creuses étant de 0,3 à 0,7 g/cm³, préférablement de 0,4 à 0,6 g/cm³ ; et/ou la taille de particule des bulles de verre creuses étant de 5 à 50 microns.

10. Composition de polyamide selon au moins l'une des revendications 1 à 9, la résistance à l'écrasement des bulles de verre creuses étant de 15 000 psi à 17 500 psi, préférablement étant de 16 000 psi à 17 500 psi.

11. Composition de polyamide selon au moins l'une des revendications 1 à 10, la fibre de renforcement étant des fibres de verre, des fibres de carbone, des fibres naturelles, des fibres de polyéthylène UHMW, des fibres de bore, des fibres d'aramide et/ou des fibres de PBO.

12. Composition de polyamide selon au moins l'une des revendications 1 à 11, le polyamide représentant de 55 % en poids à 70 % en poids, préférablement de 60 % en poids à 70 % en poids, plus préférablement de 65 % en poids à 70 % en poids, sur la base du poids total de la composition de polyamide ; la fibre de renforcement étant présente en la teneur d'une plage de 15 % en poids à 35 % en poids, 20 % en poids à 35 % en poids, ou 25 % en poids à 30 % en poids, sur la base du poids total de la composition de polyamide.

13. Application de la composition de polyamide selon au moins l'une des revendications 1 à 12 dans les pièces à poids léger, préférablement dans les pièces à poids léger pour véhicules.

14. Article préparé à partir de, ou pouvant être préparé à partir de la composition de polyamide selon au moins l'une des revendications 1 à 12.
